Europäisches Patentamt

European Patent Office

Office européen des brevets

(19)

(11) Publication number: **0 237 300**
**A2**

# EUROPEAN PATENT APPLICATION

(12)

(21) Application number: **87301979.8**

(51) Int. Cl.⁴: **B 60 R 25/04**

(22) Date of filing: **06.03.87**

(30) Priority: **10.03.86 MX 183686**

(43) Date of publication of application:
**16.09.87 Bulletin 87/38**

(84) Designated Contracting States: **DE ES FR GB IT**

(71) Applicant: **Carrillo Arzuaga, Jose**
**Calle Pintor Regollos Casa Carrillo**
**Beobla Irun (ES)**

(72) Inventor: **Carrillo Arzuaga, Jose**
**Calle Pintor Regollos Casa Carrillo**
**Beobla Irun (ES)**

(74) Representative: **Heath, Derek James et al**
**Bromhead & Co. 30 Cursitor Street Chancery Lane**
**London EC4A 1LT (GB)**

The title of the invention has been amended (Guidelines for Examination in the EPO, A-III, 7.3).

(54) **System for preventing engine damage and theft of automotive vehicles.**

(57) An improved anti-theft system for automotive vehicles. The system also prevents engines from possible connecting rod and piston jamming, and instantaneously cuts off both the fuel supply and the supply of electrical current from the battery.

This invention also has the advantage of being able to reset both the fuel line and that of the battery current at will. Consequently, the system avoids either short circuit failures due to overheating or major mechanical troubles, and indicates such anomalies on the vehicle instrument panel when operating under working conditions, so as to protect against major mechanical failures caused by overheating due to the lack of water or oil.

FIG.5

EP 0 237 300 A2

Bundesdruckerei Berlin

# Description

## Improvements To An Anti-Robbery and Protective System For Automotive Vehicles

### BACKGROUND OF THE INVENTION

As is well known, there have been many types of automotive anti-theft devices available in the marketplace. However, these systems traditionally have consisted of a modification of the electrical circuitry within an automobile. Other systems are available, albeit on a smaller scale, that modify the fuel supply system of the automobile. Unfortunately, a more effective system that combines both characteristics and that uses a minimum number of parts (as in the case of the present invention) is not readily available.

It is also known that, in the past, other modifications have been made in order to spot possible mechanical failures in advance. Some of these modifications have proved to be generally successful but, until now, each one of them presents difficulties: for example, too many parts are used and their installation is very complicated.

As those of ordinary skill will recognize, in order to achieve the aforementioned, a variety of materials and a diversity of widely known parts are used. Therefore, these will not be described in detail.

Generally, anti-theft systems for automotive vehicles currently in the market are characterized by the installation of a series of components and parts. Such components and parts are controlled by a lock with a special key. The lock may be hidden as desired. The system is electrically activated such that when an intruder tries to open any section of the vehicle, such as doors, trunk or hood, the system indicates that an anomaly exists by sounding an alarm. The alarm may be a bell or buzzer that stops only by closing the circuit with the aforementioned key, or by removing the battery, or when the battery current is exhausted.

The anti-theft systems currently in the marketplace, both with and without alarms, operate on the fuel injection line by opening or closing the carburetor as desired. These systems however, can be easily tampered with by filling up the carburetor deposit with a bottle of fuel allowing the fuel to be consumed, and repeating said operation as many times as necessary.

The improved anti-theft system herein described, which also protects the vehicle against connecting rod and piston jamming, has many advantages over other systems. It is an object and feature of the invention to provide a simply constructed anti-theft system which is novel. Although the system of this invention uses parts and materials already known, it is the new and unique combination of its parts and other parts which result in a novel anti-theft system.

As a matter of fact, the prior art contains various anti-theft systems for automotive vehicles. It is an object and feature of the invention to combine an anti-theft system with a double function operating in a practical, easy and fully effective manner as the one described herein.

The prior art has been briefly mentioned in order to understand the scope of this invention which, as it has been stated at the beginning of the description, refers to a novel and improved anti-theft system for automotive vehicles, which also protects against connecting rod and piston jamming.

### BRIEF SUMMARY OF THE INVENTION

One of the objectives of this invention is to provide an improved anti-theft system for automotive vehicles, which is more effective and economical than the anti-theft systems in the prior art.

Another objective of this invention is to provide an anti-theft system with a minimum of parts and which is easily installed.

Furthermore, another objective of this invention is to provide an anti-theft system which also indicates to the user the existence of serious mechanical trouble and automatically and instantaneously stops the vehicle upon detection of mechanical trouble.

Another objective of this invention is to provide an anti-theft system which, by adding small components, can warn about mechanical problems such as engine or water overheating. The anti-theft system can be extended to warn about mechanical problems in the transmission case or gearbox, the differential case, or even the hydraulic brake system; thereby resulting in a more efficient and useful anti-theft device than those in the prior art.

Another feature of the invention is that the operation of the vehicle can be reset as desired, even after a failure has been detected by the anti-theft device and resulted in the automatic and instantaneous stopping of the vehicle. This arrangement may be used, for example, to permit the driver to reach the curb or the edge of the road in order to avoid a traffic accident, or to keep the vehicle running from a sufficient time to enable the driver to reach a safe place or service station where the vehicle may be repaired.

### BRIEF DESCRIPTION OF THE DRAWING

The characteristic details of this improved anti-robbery system which also protects vehicles against possible connecting rod and piston jamming, are clearly shown in the following detailed description taken in conjunction with the accompanying drawings, in which:

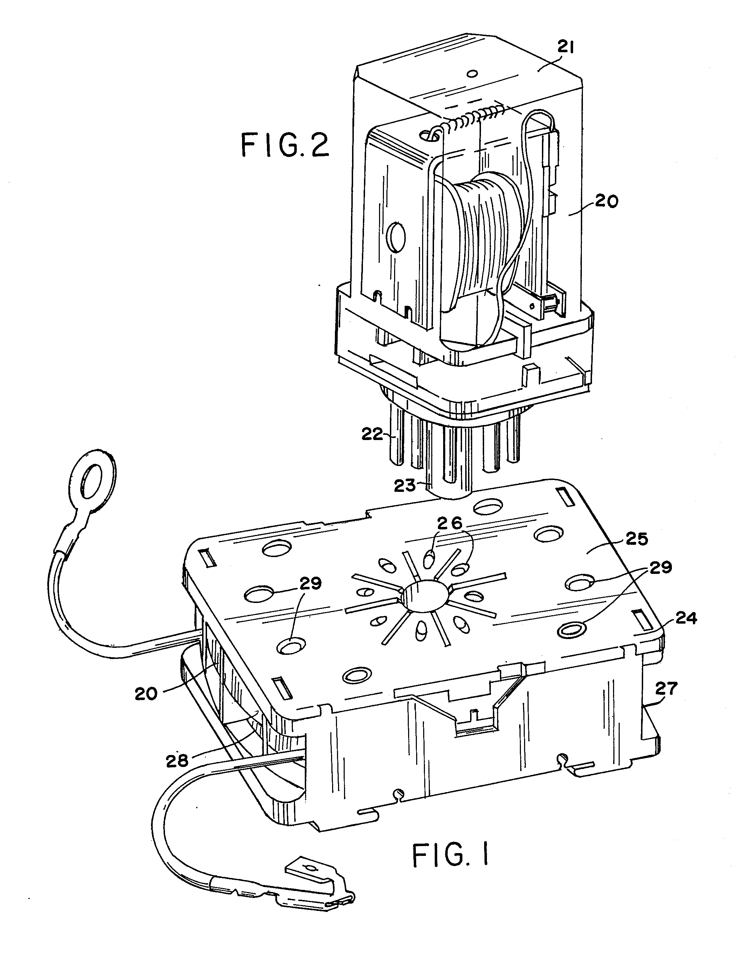

Figure 1 is a perspective view of one of the main components of this invention, which is a connector base from which other components are projected.

Figure 2 is a view slightly in perspective of a primary relay which is perfectly embedded on the upper part of the base shown on Figure 1.

Figure 3 is also a perspective view of a secondary relay which may be connected to the outlet of the base shown on Figure 1.

Figure 4 is also a perspective view of an emergency restarter which may be connected both to the current line, and to the secondary relay shown on Figure 3.

Figure 5 is a schematic electrical circuit diagram of all the components of the anti-theft and protective system against connecting rod and piston jamming already installed in an automotive vehicle.

Even though the invention are used some other components, these are widely known and their use is so generalized that they will be only briefly mentioned herein.

## DETAILED DESCRIPTION OF A PREFERRED EMBODIMENT

In a preferred, but in no way limiting modality of my invention, as referred to the above mentioned figures, the improved anti-theft system which protects automotive vehicles against connecting rod and piston jamming, is made up of a plurality of parts which, combined, operate as a whole and which consist basically of a primary relay, a connector base specially designed for such primary relay, an emergency restarter, a secondary relay and a series of bulbs, alarms or buzzers and connecting devices which can be distinctly installed to measure the oil pressure in the engine, transmission or differential case, in the brake system, or to determine overheating in the water supply. An anomaly in any of the aforementioned engine systems can be recorded on the vehicle instrument panel by means of lights or buzzers. In addition, the faulting engine system can be stopped instantaneously if it reaches of a pre-established value, and reset as desired by the vehicle operator to permit the vehicle to either reach the curb, the edge of the road, or other safe place.

Generally, anti-theft systems currently in the marketplace operate by means of electrical action devices that indicate by alarms the possible theft of the vehicle whenever the electrical current flow is interrupted. All such anti-theft systems stop acting by means of locks connected to the battery.

In the system hereinafter described, the vehicle cannot be started in any way unless the owner so desires, and the use of the alarm by the owner is optional.

As previously mentioned, my anti-theft and protective system against connecting rod and piston jamming consists of two relays, which are devices that relay or are modified whenever a failure exists. The relays open or close the circuit and if they are removed, stop the passage of electricity from the battery. One of the relays is the primary relay (20), which in this particular instance has a rectangular shape (21) and which has in its bottom portion, a series of legs or surrounding outlets (22) with a central shank (23). Such primary relay (20) has a capacity of 12 volts and 10 amperes or 250 volts, and can be coupled or uncoupled at will to a connector base (24) specially designed to receive said primary relay (20).

The connector base (24) also has a rectangular shape, and a series of perforations (26) both radial and circular, in its upper central portion (25). The central shank (23) and the series of legs or surrounding outlets (22) of the primary relay (20) are inserted into the perforations in the upper central portion of the connector base (24). As previously mentioned, said connector base (24) has a special design. Specifically with reference to the placement of perforations (26), the circuit cannot be "bridged" whenever the primary relay (20) is missing, for example whenever someone tries to rob the vehicle.

The connector base (24) also has, on its parallel side walls (27), a series of connecting cavities or holes (28) which operate by means of a series of devices or screws (29) placed on the upper portion (25) which are identified for purposes of installation or connection by numbers or letters. The connector base (24) has a capacity of 10 amperes, 380 volts.

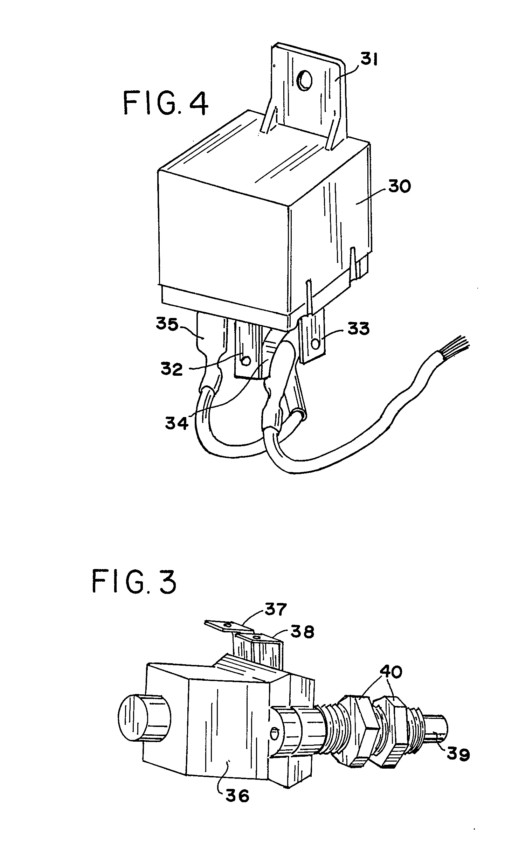

The secondary relay (30) is shown in Figure 3. In this embodiment, said secondary relay (30), has a quadrangular shape with a protrusion (31) which may be secured by any conventional fastening means to the inner or lower part of the vehicle instrument panel. The secondary relay (30) presents on its bottom portion four flat metallic legs (32) separately arranged, one of which (33) is connected to the connector base (24). Another connection (34), interconnects the secondary relay (30) to the vehicle battery. The third connection (35) is connected to an emergency reset device (36). The secondary relay (30) has a capacity of 12 volts and 40 amperes.

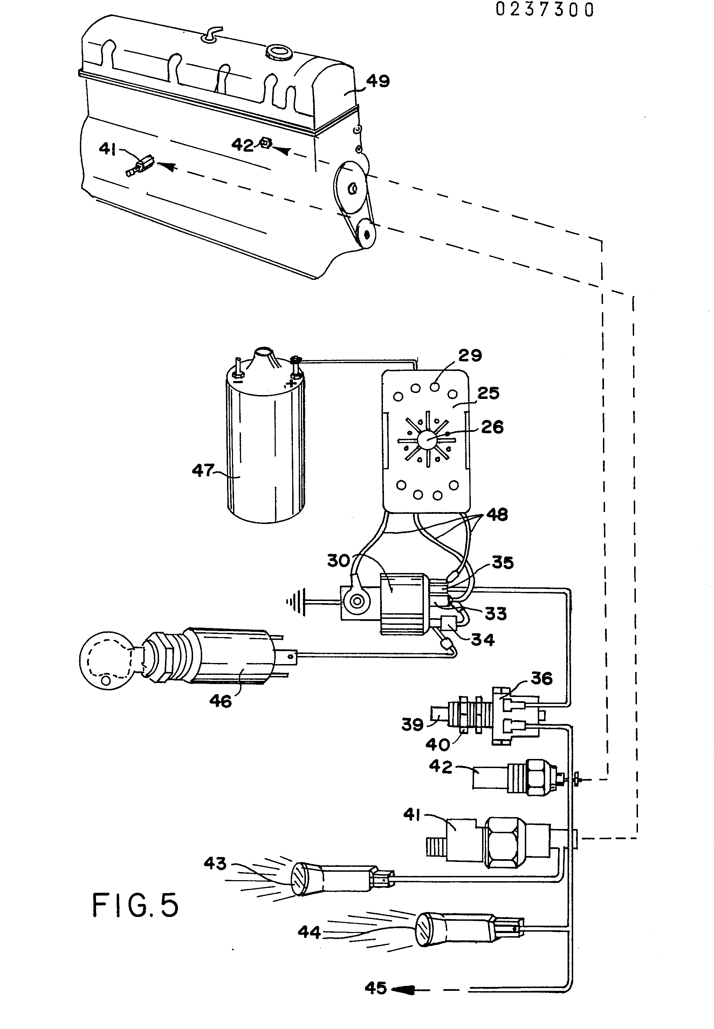

The reset device (36) is shown in Figure 4. In this embodiment, said reset device consists of two upper flat metallic protrusions, one protrusion (37) is connected to the leg (34) of the secondary relay (30), and the other metallic protrusion (38) is connected to the vehicle coil. The emergency reset device also contains a button (39) which closes or opens the circuit, thereby resetting vehicle operation. This emergency reset device (36) is fixed to the vehicle chassis by two hexagonal nuts (40).

In another embodiment, a series of bulbs connected in the connecting cavities or holes (28) of the base (24), may be installed to measure oil pressure or temperature.

In order for the anti-theft system of my invention also to operate as a protective system against connecting rod and piston jamming, which may be caused for example by overheating due to the lack of water or oil pressure, indicator bulbs may be placed in various engine systems that are intended to be protected, said bulbs being specially calibrated to desired values. Bulbs which may be used for this purpose are available, and usually are factory calibrated; however, the values at which they are calibrated are too high. As a result, the levels at which an engine system anomaly or failure is indicated on the vehicle dashboard indicators already is too late to prevent connecting rod and piston jamming or to stop the vehicle before serious engine damage occurs.

For example, in a regular gasoline vehicle the original commercial bulb used to indicate temperature is calibrated to show an abnormality when temperature is around 115°C. At this temperature, however, a major failure may be easily provoked because normal heating of this type of vehicle is between 90 and 94°C. Consequently, it is not suitable for the bulb to be calibrated at 115-120°C. In this preferred embodiment, the bulb must be calibrated to indicate a temperature much lower than that of the commercial bulb, for example, at 102°C. At that temperature, the indicator on the vehicle dashboard would go off, and the vehicle would be stopped immediately to enable the operator to locate the failure and avoid a greater engine damage.

The same comment can be made for the bulb indicating oil pressure, which is commercially calibrated at 3 pounds per square inch, or 0.25 kilograms per square centimeter. In this preferred embodiment of the system for preventing rod and piston jamming, the bulb used should have a different calibration which is dependant on the vehicle life. For instance, for a new vehicle the bulb should be calibrated to a pressure of 14 pounds per square inch or one kilogram per square centimeter, and for a used vehicle it should be calibrated to a pressure of 7 pounds per square inch, that is, 0.5 kilograms per square centimeter.

What has been described above also applies to those vehicles with diesel engines, but the bulbs used will be calibrated in yet another manner, since diesel engines operate at a temperature lower than gasoline driven engines, specifically, from 80 to 85°C. Consequently, if the bulb commercially used for diesel engines is 105-110°C, a bulb calibrated at 92°C should be installed, so that when the engine reaches such temperature, the indicator records it, and the vehicle is immediately stopped, thereby preventing engine damage. Regarding the calibration of the oil bulb for a diesel engine, it is the same as previously stated for gasoline engines.

In the same manner as described for indicating temperature and oil levels, bulbs calibrated at different values can be installed to indicate with due anticipation, possible failures in the transmission case, the differential case, or even in the brake system. In such an adaptation, again possible damage to such sections of the vehicle, could be avoided by automatically stopping the vehicle when certain values are reached.

As previously mentioned, indicator bulbs both for oil pressure and temperature are connected to the base of the primary relay through the connecting cavities or holes on the side walls of said bulbs.

Regarding the anti-theft system herein described, instantaneously cutting off the fuel supply, has an enormous advantage, especially for diesel engines. Moreover, this is a feature which current anti-theft systems do not possess. Certain makes of conventional diesel engines have the inconvenience that whenever the engine stops, they intake air and must be drained. In such systems, it is not possible to immediately reset the engine operation until the fuel is used up. The foregoing may be avoided using the system of my invention, which operates instantaneously by merely pressing the emergency reset button.

Installation details, must generally be modified, depending on the vehicle, but in a brief manner it can be mentioned that the secondary relay is "bridged" between two legs. One of the legs permits the entry of current, and the other leg is connected directly to the bulbs, which can be connected in parallel to operate in the various sections of the vehicle.

The emergency reset device may be installed between the oil and temperature bulbs or other optional bulbs, and also is connected to the secondary relay.

The connector base of the primary relay is connected to a ground cable. Another cable is connected from the previous one, which interconnects electrical current entry to the connector base; and through the next connection from the connector base. After the previous two connections, current is sent to the indicator bulbs, lights, alarms or buzzers. The current of the battery coil to the system is cut when the primary relay is removed, for example when the vehicle is not in operation or is parked. Lastly, on the connector base, opposite the preceding connection, a single outlet to the coil of current intake may be installed.

In a much more simplified embodiment of the improved anti-theft system, which also protects automotive vehicles against possible connecting rod and piston jamming, the various bulbs are installed, either to measure oil pressure or temperature, in the various points of the vehicle in which protection is desired, such as engine, transmission case, differential case or brake system, and connected, in parallel, to an emergency switch, and from this emergency switch to the secondary relay. Subsequently, the secondary relay is connected on one side to the battery current, and has a bypass to the key which is used to start the vehicle. The secondary relay also is connected on the other side to a series of lights, alarms or buzzers arranged on the vehicle instrument panel. Through this same channel, another bypass may be installed which is connected to the connector base in which the secondary relay is properly embedded, where one of the connections goes from the connector base to the current source and the other connection is connected to ground.

The anti-theft system of my invention automatically cuts-off current and fuel supply when engine failure occurs and protects the vehicle from theft by removing the primary relay from its place, that is from the connector base. Notably, in this invention, current or fuel can be reset by separately pressing the emergency reset button without using the vehicle starter.

Even though my invention has been only described with respect to a few specific embodiments, all the experts on this subject must understand that other embodiments and applications are included within the spirit and scope of said invention.

**Claims**

1. In an anti-theft and system for protecting against connecting rod and piston jamming for automotive vehicles which consists of a combination of a primary relay, a connector base for the primary relay, and emergency reset device, a secondary relay, at least one bulb to measure temperature or oil pressure, a plurality of connections originating from a battery and, optionally, a series of lights, alarms or buzzers placed on the vehicle instrument panel, with the characteristic that bulbs are connected in parallel directly to the emergency switch; afterwards, this is connected to the secondary relay, which on one side is connected to the battery, with a bypass to the vehicle starter and another to lights, alarms or buzzers and through this same conduct it is connected to the connector base where the primary relay, and one of its connections is to ground and the other to current.

2. Improvements to an anti-theft and protective system against connecting rod and piston jamming for automotive vehicles, according to what is claimed in Clause 1, characterized in addition, in that the primary relay adopts an elongated shape, having in its bottom portion a central shank with a series of legs or surrounding outlets and a capacity of 12 volts and 10 amperes, and is coupled or uncoupled at will to or from the connector base.

3. Improvements to an anti-theft and protective system against connection rod and piston jamming for automotive vehicles, according to what is claimed in Clause 1, characterized in addition in that the connector base has a rectangular shape, in which surface are located a series of radial and circular perforations where are inserted both the shank and the series of surrounding legs of the primary relay, having on its side walls a series of connecting cavities or holes which are adjusted with screws, and with a capacity of 10 amperes and 380 volts.

4. Improvements to an anti-theft and protective system against connecting rod and piston jamming, according to what is claimed in Clause 1, characterized besides in that the secondary relay is of a quadrangular shape, in its bottom part it has a series of interconnecting outlets, and has a capacity of 12 volts and 40 amperes.

5. Improvements to an anti-theft and protective system against connecting rod and piston jamming of automotive vehicle, according to what is claimed in Clause 1, characterized besides in that the emergency reset device consists of two outlets to be connected, one to the secondary relay and the other to the vehicle coil, and in addition it presents a button to reset current flow at will.

6. Improvements to an anti-theft and protective system against connecting rod and piston jamming for automotive vehicles, according to what is claimed in Clause 1, characterized in addition in that bulbs used to measure oil pressure or to measure temperature of the engine, transmission case, differential case, or brakes system, are calibrated at preset values that are lower than those used in commercial bulbs.

7. Improvements to an anti-theft and protective system against connecting rod and piston jamming for automotive vehicles, according to what is claimed in any of the previous clauses, characterized in addition in that for guaranteeing an additional protection against the vehicle robbery, the primary relay is removed from the connector base when the vehicle will not be used.

8. In a motor vehicle having an electrically operated fuel and ignition system receiving energy from a battery in the vehicle and starter, an alarm system activated by a circuit, said circuit comprising:

(a) a connector base having a means for receiving a first switch means;

(b) a first switch means detachably mounted into said connector base for controlling the vehicle starter and fuel system;

(c) a second switch means connected to the battery having a first bypass means to the vehicle starter and a second bypass means to said connector base;

(d) at least one gauge connected to said second switch means for detecting a predetermined automotive characteristic and terminating such current in response to such automotive failure; and

(e) a reset means connected in parallel to said gauge and to said second switch means for completing the circuit when said first switch means is detached from said connector base or for energizing the vehicle starter when said gauge has detected automotive failure.

0237300

FIG.2

21

20

22

23

26

29

25

29

24

27

20

28

FIG. I

FIG. 4

FIG. 3

0237300

FIG.5